# EUROPÄISCHE PATENTSCHRIFT

(11) **EP 3 582 290 B1**
(45) Veröffentlichungstag und Bekanntmachung des Hinweises auf die Patenterteilung: **06.03.2024**
(21) Anmeldenummer: 19178171.5
(22) Anmeldetag: 04.06.2019
(51) Int. Cl.: H01M 50/204, H01M 50/24, H01M 50/271, H01M 10/04

(54) **LASTTRAGENDES BATTERIEMODUL FÜR EIN KRAFTFAHRZEUG UND KRAFTFAHRZEUG**
LOAD-BEARING BATTERY MODULE FOR A MOTOR VEHICLE AND MOTOR VEHICLE
MODULE DE BATTERIE PORTEUR DE CHARGE POUR UN VÉHICULE AUTOMOBILE ET VÉHICULE AUTOMOBILE

(30) Priorität: 14.06.2018 DE 102018114226
(43) Veröffentlichungstag der Anmeldung: 18.12.2019
(73) Patentinhaber: Volkswagen Aktiengesellschaft, 38440 Wolfsburg (DE)
(72) Erfinder: Herten, Helge, 38300 Wolfenbüttel (DE); Volkmar, Henning, 38550 Isenbüttel (DE); Schaar, Bastian, 38116 Braunschweig (DE); Wesche, Frank, 38458 Velpke (DE); Kaufmann, Jörg, 38550 Isenbüttel (DE); Hohm, Volker, 38112 Braunschweig (DE); Ströhlein, Tobias, 38110 Braunschweig (DE); Bornemann, Krino, 39326 Klein Ammensleben (DE)
(74) Vertreter: Bals & Vogel Patentanwälte PartGmbB

(56) Entgegenhaltungen:
- EP-A1- 2 421 069
- WO-A1-2013/070593
- CN-U- 204 271 155
- US-A1- 2016 276 718

## Beschreibung

Die vorliegende Erfindung betrifft ein lasttragendes Batteriemodul für ein Kraftfahrzeug sowie ein Kraftfahrzeug mit einem lasttragenden Batteriemodul.

Elektrofahrzeuge sowie ein Großteil der Hybridfahrzeuge weisen einen Elektromotor auf, welcher insbesondere zum Antreiben des Fahrzeugs ausgebildet ist. Zur Bereitstellung der hierfür erforderlichen elektrischen Energie sind unterschiedliche Konzepte bekannt. Einerseits kann die elektrische Energie direkt erzeugt werden, beispielsweise mittels einer Brennstoffzelle. Alternative Konzepte beruhen auf der Speicherung elektrischer Energie in Batterien, insbesondere in Hochvoltbatterien.

Bei der Entwicklung von Batterien bzw. Batteriemodulen stehen insbesondere zwei Aspekte im Mittelpunkt, nämlich die Speicherung einer möglichst großen Menge elektrischer Energie bei einem möglichst kleinen Bauraum. Hierfür werden Batteriezellen mit immer größeren Energiedichten entwickelt. Gleichwohl haben derartige Batteriezellen den Nachteil, dass die hierfür verwendeten Stoffe eine hohe Reaktivität aufweisen und von ihnen daher ein besonders hohes Gefahrenpotenzial ausgeht. Im Falle einer Beschädigung der Batteriezellen, beispielsweise durch einen Fahrzeugcrash, können diese Brände auslösen oder in Extremfällen sogar explodieren.

Aus Gründen der Betriebssicherheit solcher Batteriemodule werden Modulgehäuse zum Schutz der Batteriezellen bzw. von mehrere Batteriezellen aufweisenden Zellpaketen vor äußeren Einflüssen fortlaufend weiterentwickelt. Das Ziel der Entwicklung solcher Modulgehäuse ist es, ein Volumen der Batteriezellen zu maximieren sowie die Abmessungen des dem Schutze der Batteriezellen dienenden Modulgehäuses zu minimieren, sodass ausreichend Schutz vor vordefinierten mechanischen Lastfällen bereitgestellt wird.

Zum Erreichen der maximalen Leistungs- und Energiedichte müssen Strukturbautele des Modulgehäuses platzsparend sowie möglichst ohne Redundanzen ausgelegt werden. Gleichzeitig muss neben dem Bauraum für die Batteriezellen bzw. Zellpakete ausreichend Bauraum innerhalb des Modulgehäuses für elektrische Leitungen und Steuergeräte vorgehalten werden. Zudem ist zu berücksichtigen, dass die Batteriezellen einen möglichst guten thermischen Kontakt zu einer Kühlungsvorrichtung des Batteriemoduls aufweisen. Ebenso müssen altersbedingte Ausdehnungseffekte der Batteriezellen bzw. Zellpakete, welche auch als "Swelling" bezeichnet werden, berücksichtigt und entsprechende konstruktive Maßnahmen zum Reduzieren des Swelling getroffen werden.

Zum Schutze der Batteriezellen vor äußeren Einflüssen sind Modulgehäuse bekannt, welche besonders steife Komponenten, insbesondere einen Modulboden und/oder Moduldeckel, aufweisen. Ferner weisen bekannte Modulgehäuse oftmals eine Struktur auf, insbesondere mit einem oder mehreren zusätzlichen Stegen, welche zum Ableiten von Kräften zwischen Moduldeckel und Modulboden ausgebildet ist. Besonders nachteilig bei einem gattungsgemäßen Modulgehäuse ist, dass eine Deformation des Zellpakets bei speziellen mechanischen Belastungen des Modulgehäuses nicht immer vermeidbar ist, sodass das Risiko des Entzündens oder Explodierens der Batteriezellen erhöht ist.

Zum Reduzieren des Swelling von Zellpaketen sind unterschiedliche Lösungen bekannt. So kann das Zellpaket beispielsweise zum Erzeugen einer dem Swelling entgegengerichteten Gegenkraft von einem inneren Gehäuse oder Käfig umgeben sein. Nachteilig hierbei ist, dass über das Gehäuse oder den Käfig äußere mechanische Belastungen oftmals auf das Zellpaket übertragbar sind, sodass hierdurch das Zellpaket beschädigt werden kann.

Zum Verbessern der Kühlung des Zellpakets sind ebenfalls diverse Lösungen aus dem Stand der Technik bekannt. Die DE 10 2008 034 876 A1 und DE 10 2009 058 070 A1 betreffen Batteriemodule, bei welchen zur Gewährleistung einer verbesserten Kühlung der Batteriezellen eine Kühlplatte mittels einer Federvorrichtung mit dem Zellpaket verspannt ist. Nachteilig hierbei ist, dass die Batteriezellen vor äußeren mechanischen Einflüssen nur mäßig geschützt sind. Aus den CN 204 271 155 U, US 2016/276718 A1, EP 2 421 069 A1 und WO 2013/070593 A1 sind weitere Batteriegehäuse und Batteriezellen bekannt.

Es ist daher Aufgabe der vorliegenden Erfindung, die voranstehend beschriebenen Nachteile bei einem Batteriemodul für ein Kraftfahrzeug sowie einem Kraftfahrzeug mit einem Batteriemodul zu beheben oder zumindest teilweise zu beheben. Insbesondere ist es Aufgabe der vorliegenden Erfindung ein Batteriemodul und ein Kraftfahrzeug zu schaffen, die auf eine einfache und kostengünstige Art und Weise einen verbesserten Schutz des Zellpakets vor äußeren mechanischen Einflüssen gewährleisten und/oder Batteriezellen mit einem reduzierten Swelling aufweisen und/oder eine verbesserte Ableitung von Wärme aus den Batteriezellen gewährleisten.

Voranstehende Aufgaben werden durch die Patentansprüche gelöst. Demnach werden die Aufgaben durch ein lasttragendes Batteriemodul für ein Kraftfahrzeug mit den Merkmalen des unabhängigen Anspruchs 1 sowie durch ein Kraftfahrzeug mit den Merkmalen des nebengeordneten Anspruchs 7 gelöst. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Batteriemodul beschrieben sind, selbstverständlich auch im Zusammenhang mit dem erfindungsgemäßen Kraftfahrzeug und jeweils umgekehrt, sodass bezüglich der Offenbarung zu den einzelnen Erfindungsaspekten stets wechselseitig Bezug genommen wird beziehungsweise werden kann. Gemäß einem ersten Aspekt der Erfindung wird die Aufgabe durch ein lasttragendes Batteriemodul für ein Kraftfahrzeug gelöst. Das Batteriemodul weist ein Modulgehäuse mit Modulseitenwänden, einem Modulboden sowie einem Moduldeckel und ein innerhalb des Modulgehäuses angeordnetes Zellpaket mit mehreren Batteriezellen auf. Erfindungsgemäß ist zwischen mindestens einer ersten Modulseitenwand und dem Zellpaket mindestens eine Federvorrichtung angeordnet, wobei die Federvorrichtung zum Drücken des Zellpakets in Richtung einer der ersten Modulseitenwand entgegengesetzten zweiten Modulseitenwand zur Bildung eines Deformationsraums zwischen der ersten Modulseitenwand und dem Zellpaket ausgebildet ist. Zwischen dem Zellpaket und dem Moduldeckel ist eine Kühlungsvorrichtung zum Ableiten von Wärme aus dem Zellpaket angeordnet. Zwischen dem Modulboden und dem Zellpaket ist eine Federvorrichtung angeordnet, wobei die Federvorrichtung zum Drücken des Zellpakets in Richtung des Moduldeckels zur Bildung eines Deformationsraums zwischen dem Modulboden und dem Zellpaket ausgebildet ist. Ferner ist innerhalb des Modulgehäuses eine Abstützvorrichtung angeordnet, welche sich zwischen dem Moduldeckel und dem Modulboden erstreckt. Das obere Abstützende ist gegen den Moduldeckel oder die zwischen dem Moduldeckel und den Zellpaketen angeordnete Kühlungsvorrichtung abgestützt. Das untere Abstützende ist gegen die zwischen dem Modulboden und den Zellpaketen angeordnete Federvorrichtung abgestützt.

Unter einem lasttragenden Batteriemodul wird im Rahmen der Erfindung ein Batteriemodul verstanden, welches den darin angeordneten Zellpaketen einen verbesserten Schutz vor äußeren mechanischen Belastungen, insbesondere bei einem Fahrzeugcrash des Kraftfahrzeugs, bietet. Zum Schutz der Zellpakete weist das Batteriemodul das Modulgehäuse auf. Das Modulgehäuse weist einen Modulboden und einen Moduldeckel auf. Zwischen dem Moduldeckel und dem Modulboden sind die Modulseitenwände angeordnet. Das Modulgehäuse weist mindestens zwei Modulseitenwände auf. Vorzugsweise weist das Modulgehäuse vier seitenwände auf. Weiter bevorzugt ist das Modulgehäuse quaderförmig ausgestaltet. Vorzugsweise sind der Modulboden und/oder der Moduldeckel und/oder die Modulseitenwände als geschlossenes Element ausgebildet, um das Zellpaket vor äußeren Einflüssen einen verbesserten sowie durchgängigen Schutz bereitzustellen. Weiter bevorzugt sind der Modulboden und/oder der Moduldeckel und/oder die Modulseitenwände ausgebildet, kinetische Energie in Verformungsenergie umzuwandeln.

Die Federvorrichtung ist zwischen der ersten Modulseitenwand und dem Zellpaket angeordnet sowie zum Drücken des Zellpakets in Richtung der zweiten Modulseitenwand ausgebildet. Vorzugsweise ist die Federvorrichtung ausgebildet, das Zellpaket flächig zu kontaktieren, um die Federkraft auf eine möglichst große Fläche des Zellpakets zu verteilen und somit Beschädigungen des Zellpakets zu vermeiden. Alternativ oder zusätzlich kann zwischen der Federvorrichtung und dem Zellpaket eine Druckverteilungsvorrichtung, insbesondere eine Druckverteilungsplatte zum gleichmäßigen Verteilen der Federkraft auf das Zellpaket angeordnet sein. Die Federvorrichtung ist vorzugsweise gegen Randbereiche der ersten Modulseitenwand abgestützt, wobei die Federvorrichtung vorzugsweise nicht gegen zentrale Bereiche der ersten Modulseitenwand abgestützt ist. Dies hat den Vorteil, dass bei einer plastischen Deformation der ersten Modulseitenwand, insbesondere in Folge eines Fahrzeugcrashs, keine oder nur eine geringe zusätzliche Spannung der Federvorrichtung erfolgt, da die Deformation des zentralen Bereichs konstruktionsbedingt stets größer als eine Deformation der Randbereiche der Modulseitenwand ist.

Vorzugsweise ist die Federvorrichtung ausgebildet, das Zellpaket flächig zu kontaktieren, um die Federkraft auf eine möglichst große Fläche des Zellpakets zu verteilen und somit Beschädigungen des Zellpakets zu vermeiden. Alternativ oder zusätzlich kann zwischen der Federvorrichtung und dem Zellpaket eine Druckverteilungsvorrichtung, insbesondere eine Druckverteilungsplatte zum gleichmäßigen Verteilen der Federkraft auf das Zellpaket angeordnet sein. Die Federvorrichtung ist vorzugsweise gegen Randbereiche des Modulbodens abgestützt, wobei die Federvorrichtung vorzugsweise nicht gegen zentrale Bereiche des Modulbodens abgestützt ist. Dies hat den Vorteil, dass bei einer plastischen Deformation des Modulbodens, insbesondere in Folge eines Fahrzeugcrashs, keine oder nur eine geringe zusätzliche Spannung der Federvorrichtung erfolgt, da die Deformation des zentralen Bereichs konstruktionsbedingt stets größer als eine Deformation der Randbereiche des Modulbodens ist. Ein derartiges Batteriemodul hat den Vorteil, dass mit einfachen Mitteln sowie auf eine kostengünstige Art und Weise ein verbesserter Schutz des Zellpakets vor äußeren Kräften bereitgestellt ist. Ferner ist eine derartige Federvorrichtung von Vorteil, wenn das Batteriemodul zwischen dem Moduldeckel und dem Zellpaket eine Kühlungsvorrichtung aufweist, da mittels der Federvorrichtung das Zellpaket gegen die Kühlungsvorrichtung drückbar und hierdurch die Kühlung des Zellpakets verbesserbar ist.

Das Batteriemodul weist vorzugsweise mehrere Zellpakete auf, welche durch die Abstützvorrichtung voneinander getrennt sind. Die Abstützvorrichtung weist ein oberes Abstützende und ein unteres Abstützende auf, wobei das obere Abstützende dem Moduldeckel und das untere Abstützende dem Modulboden zugewandt ist. Es kann erfindungsgemäß vorgesehen sein, dass die Abstützvorrichtung als Kühlungsvorrichtung zur Wärmeabfuhr aus den Zellpaketen ausgebildet ist. Vorzugsweise kontaktiert die Abstützvorrichtung zur Wärmeabfuhr eine dem Moduldeckel benachbart angeordnete Kühlungsvorrichtung. Die Abstützvorrichtung weist vorzugsweise eine Form auf, durch welche ein Abknicken der Abstützvorrichtung bei mechanischer Druckbelastung reduziert ist. Vorzugsweise weist die Abstützvorrichtung daher ein relativ hohes axiales Widerstandsmoment auf. Eine Abstützvorrichtung hat den Vorteil, dass eine Deformation des Moduldeckels sowie des Modulbodens in Richtung des Zellpakets abstützbar ist, sodass das Ausmaß der Deformation reduzierbar ist. Auf diese Weise ist das Risiko der Beschädigung des Zellpakets mit einfachen Mitteln sowie auf eine kostengünstige Art und Weise reduzierbar.

Aufgrund des Wegdrückens des Zellpakets von der ersten Modulseitenwand mittels der Federvorrichtung ist zwischen der ersten Modulseitenwand und dem Zellpaket der Deformationsraum ausgebildet. Der Deformationsraum ist ein Freiraum, welcher zur Aufnahme von Abschnitten einer deformierten ersten Modulseitenwand ausgebildet ist. Somit ist im Crashfall mittels der ersten Modulseitenwand kinetische Energie in Verformungsenergie umwandelbar, ohne dass die erste Modulseitenwand das Zellpaket kontaktieren und hierdurch beschädigen kann.

Das Batteriemodul ist vorzugsweise derart ausgebildet, dass die Federvorrichtung das Zellpaket nicht direkt gegen die zweite Modulseitenwand drückt, sondern gegen eine Abstützvorrichtung, welche zwischen der zweiten Modulseitenwand und dem Zellpaket derart angeordnet ist, sodass zwischen der Abstützvorrichtung und der zweiten Modulseitenwand ebenfalls ein Deformationsraum ausgebildet ist. Die Abstützvorrichtung kann beispielsweise eine Zwischenwand aufweisen, welche vorzugsweise über Abstützelemente gegen die zweite Seitenwand abgestützt und/oder am Modulboden und/oder Moduldeckel gehalten ist. Alternativ kann die Abstützvorrichtung einen Schaum aufweisen, welcher zur Verteilung von Kräften auf eine möglichst große Kontaktfläche des Zellpakets ausgebildet ist, um das Risiko einer Beschädigung des Zellpakets im Falle eines Fahrzeugcrashs zu reduzieren.

Die Kühlungsvorrichtung ist vorzugsweise derart ausgebildet, eine möglichst große Fläche des Zellpakets zu kontaktieren, um somit einen maximalen Wärmeübergang vom Zellpaket auf die Kühlungsvorrichtung zu ermöglichen. Weiter bevorzugt weist die Kühlungsvorrichtung ein Material mit einem relativ hohen Wärmeleitkoeffizienten auf, sodass ein Abtransport der Wärme von dem Zellpaket verbessert ist. Eine Kühlungsvorrichtung hat den Vorteil, dass eine Kühlung des Zellpakets verbesserbar und somit das Risiko einer Beschädigung des Zellpakets aufgrund von Überhitzung signifikant reduzierbar ist.

Ein erfindungsgemäßes Batteriemodul für ein Kraftfahrzeug hat gegenüber herkömmlichen Batteriemodulen den Vorteil, dass mit einfachen Mitteln sowie auf eine kostengünstige Art und Weise ein dem Zellpaket benachbarter Deformationsraum bereitgestellt ist, welcher einen verbesserten Schutz des Zellpakets vor äußeren mechanischen Beanspruchungen, insbesondere durch einen Fahrzeugcrash, gewährleistet. Zudem hat die definierte sowie flächige Kompression des Zellpaktes durch die Federvorrichtung den Vorteil, dass das Swelling des Zellpakets reduziert ist.

Gemäß einer bevorzugten Weiterentwicklung der Erfindung kann bei einem Batteriemodul vorgesehen sein, dass die mindestens eine Federvorrichtung eine Schraubenfeder und/oder eine Tellerfeder aufweist. Die Schraubenfeder bzw. Tellerfeder ist vorzugsweise an einem Randbereich des Zellpakets sowie der Modulseitenwand angeordnet, da im Falle einer äußeren mechanischen Beanspruchung des Modulgehäuses die größte Deformation der Modulseitenwände in zentralen Bereichen der Modulseitenwände erfolgt. Auf diese Weise ist die Gefahr einer Beschädigung des Zellpakets aufgrund einer Deformation einer Modulseitenwand reduziert. Weiter bevorzugt ist zwischen der Federvorrichtung und dem Zellpaket eine Druckverteilungsvorrichtung zum Verteilen der Federkraft über eine Seitenfläche des Zellpakets angeordnet. Somit ist das Risiko einer Beschädigung des Zellpakets durch die Federvorrichtung reduzierbar. Eine Schraubenfeder und eine Tellerfeder sind kostengünstig herstellbar und leicht montierbar. Zudem ist mittels derartiger Federn eine definierte Druckkraft auf das Zellpaket bereitstellbar.

Es ist erfindungsgemäß bevorzugt, dass die mindestens eine Federvorrichtung ein Federblech aufweist. Das Federblech weist vorzugsweise Randbereiche auf, welche gegen Randbereiche der Modulseitenwand abgestützt sind. Ferner weist das Federblech einen zentralen Bereich auf, welcher vorzugsweise mindestens eine Seite des Zellpakets flächig kontaktiert. Im Falle einer äußeren mechanischen Beanspruchung des Modulgehäuses erfolgt die größte Deformation der Modulseitenwände in zentralen Bereichen der Modulseitenwände, sodass bei einer derartigen Anordnung die Gefahr einer Beschädigung des Zellpakets aufgrund einer Deformation einer Modulseitenwand reduziert ist. Daher ist es bevorzugt, dass das Federblech im zentralen Bereich eine größere Dicke und somit eine höhere Steifigkeit als in den Randbereichen aufweist, um einem Einknicken im zentralen Bereich entgegenzuwirken. Ein solches Federblech ist beispielsweise mittels eines Tailored Drawn Verfahren herstellbar. Durch das flächige Kontaktieren des Zellpakets durch das Federblech ist die Federkraft des Federblechs besser auf das Zellpaket übertragbar. Auf diese Weise ist das Risiko einer Beschädigung des Zellpakets durch die Federvorrichtung reduzierbar. Ein Federblech ist kostengünstig herstellbar sowie leicht montierbar. Zudem ist mittels eines Federblechs eine definierte Druckkraft auf das Zellpaket bereitstellbar.

Weiter bevorzugt ist zwischen der zweiten Modulseitenwand und dem Zellpaket eine Federvorrichtung angeordnet, wobei die Federvorrichtung zum Drücken des Zellpakets in Richtung der ersten Modulseitenwand zur Bildung eines Deformationsraums zwischen der zweiten Modulseitenwand und dem Zellpaket ausgebildet ist. Demnach weist das Batteriemodul an voneinander entgegengesetzten Modulseitenwänden jeweils eine Federvorrichtung auf. Vorzugsweise sind die beiden Federvorrichtungen symmetrisch oder zumindest im Wesentlichen symmetrisch, insbesondere spiegelsymmetrisch, zueinander ausgebildet. Vorzugsweise ist die Federvorrichtung ausgebildet, das Zellpaket flächig zu kontaktieren, um die Federkraft auf eine möglichst große Fläche des Zellpakets zu verteilen und somit Beschädigungen des Zellpakets zu vermeiden. Alternativ oder zusätzlich kann zwischen der Federvorrichtung und dem Zellpaket eine Druckverteilungsvorrichtung, insbesondere eine Druckverteilungsplatte zum gleichmäßigen Verteilen der Federkraft auf das Zellpaket angeordnet sein. Die Federvorrichtung ist vorzugsweise gegen Randbereiche der zweiten Modulseitenwand abgestützt, wobei die Federvorrichtung vorzugsweise nicht gegen zentrale Bereiche der zweiten Modulseitenwand abgestützt ist. Dies hat den Vorteil, dass bei einer plastischen Deformation der zweiten Modulseitenwand, insbesondere in Folge eines Fahrzeugcrashs, keine oder nur eine geringe zusätzliche Spannung der Federvorrichtung erfolgt, da die Deformation des zentralen Bereichs konstruktionsbedingt stets größer als eine Deformation der Randbereiche der Modulseitenwand ist. Ein derartiges Batteriemodul hat den Vorteil, dass eine Ausrichtung des Zellpakets innerhalb des Modulgehäuses über ein Kräftegleichgewicht der Federvorrichtungen mit einfachen Mitteln sowie zuverlässig erzielbar ist. Zudem ist das Risiko einer Beschädigung des Zellpakets weiter reduziert, da eine maximale von außen auf das Zellpaket übertragbare Kraft durch die Federvorrichtungen begrenzt ist.

Vorzugsweise sind mindestens zwei Federvorrichtungen als monolithische Federvorrichtung ausgebildet. Unter einer monolithischen Ausbildung wird im Rahmen der Erfindung insbesondere verstanden, dass die zwei Federvorrichtungen einstückig miteinander ausgebildet sind. Es kann erfindungsgemäß auch vorgesehen sein, dass die monolithische Federvorrichtung aus einzelnen Federvorrichtungen zusammengesetzt ist, die miteinander stoffschlüssig und/oder formschlüssig verbunden, insbesondere verschweißt, sind. Derartige Federvorrichtungen sind leicht herstellbar und mit einfachen Mitteln sowie kostengünstig zwischen dem Modulgehäuse und dem Zellpaket montierbar, sodass die Herstellungskosten des Batteriemoduls hierdurch reduzierbar sind.

Es ist erfindungsgemäß bevorzugt, dass die Abstützvorrichtung parallel zu zwei entgegengesetzten Modulseitenwänden und/oder senkrecht zum Modulboden und/oder Moduldeckel angeordnet ist. Auf diese Weise ist die Abstützvorrichtung zur verbesserten Entlastung der Modulseitenwände bzw. des Moduldeckels und des Modulbodens, insbesondere bei einem Fahrzeugcrash, ausgebildet. Hierdurch ist das Risiko einer Beschädigung des Zellpakets weiter reduziert.

Gemäß einem zweiten Aspekt der Erfindung wird die Aufgabe durch ein Kraftfahrzeug gelöst. Das Kraftfahrzeug weist einen Elektromotor zum Antreiben des Kraftfahrzeugs und ein erfindungsgemäßes Batteriemodul zum Bereitstellen elektrischer Energie zum Betreiben des Elektromotors gemäß dem ersten Aspekt der Erfindung auf.

Bei dem beschriebenen Kraftfahrzeug ergeben sich sämtliche Vorteile, die bereits zu einem Batteriemodul gemäß dem ersten Aspekt der Erfindung beschrieben worden sind. Demnach hat das erfindungsgemäße Kraftfahrzeug gegenüber herkömmlichen Kraftfahrzeugen den Vorteil, dass dieses ein Batteriemodul aufweist, bei welchem mit einfachen Mitteln sowie auf eine kostengünstige Art und Weise ein dem Zellpaket benachbarter Deformationsraum bereitgestellt ist, welcher einen verbesserten Schutz des Zellpakets vor äußeren mechanischen Beanspruchungen, insbesondere durch einen Fahrzeugcrash, gewährleistet. Zudem hat die definierte sowie flächige Kompression des Zellpaktes durch die Federvorrichtung den Vorteil, dass das Swelling des Zellpakets reduziert ist.

Ein nicht erfindungsgemäßes Batteriemodul, ein erfindungsgemäßes Batteriemodul sowie ein erfindungsgemäßes Kraftfahrzeug werden nachfolgend anhand von Zeichnungen näher erläutert. Es zeigen jeweils schematisch:
- Figur 1: in einer Schnittdarstellung eine erste Form eines nicht erfindungsgemäßen Batteriemoduls,
- Figur 2: in einer Schnittdarstellung eine zweite Form eines nicht erfindungsgemäßen Batteriemoduls,
- Figur 3: in einer Schnittdarstellung eine bevorzugte dritte Ausführungsform eines erfindungsgemäßen Batteriemoduls,
- Figur 4: in einer Schnittdarstellung eine bevorzugte vierte Ausführungsform eines erfindungsgemäßen Batteriemoduls und
- Figur 5: in einer Seitenansicht eine bevorzugte Ausführungsform eines erfindungsgemäßen Kraftfahrzeugs.

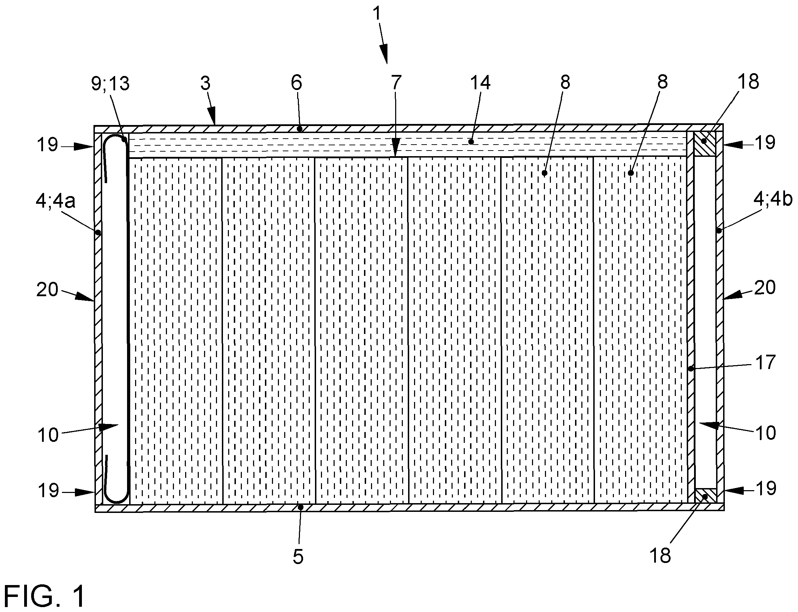

Elemente mit gleicher Funktion und Wirkungsweise sind in den Fig. 1 bis 5 jeweils mit denselben Bezugszeichen versehen.

In Fig. 1 ist eine erste Form eines nicht erfindungsgemäßen Batteriemoduls 1 schematisch in einer Schnittdarstellung abgebildet. Das Batteriemodul 1 weist ein Modulgehäuse 3 mit Modulseitenwänden 4, einem Modulboden 5 sowie einem Moduldeckel 6 auf. Gegen Randbereiche 19 einer zweiten Modulseitenwand 4b ist eine Zwischenwand 17 über zwei Abstützelemente 18 abgestützt, wobei ein Abstützelement 18 dem Moduldeckel 6 und ein Abstützelement 18 dem Modulboden 5 benachbart angeordnet ist. Zwischen der Zwischenwand 17 und der zweiten Modulseitenwand 4b ist somit ein Deformationsraum 10 zur Aufnahme eines deformierten zentralen Bereichs 20 der zweiten Modulseitenwand 4b ausgebildet. Im Inneren des Modulgehäuses 3 ist ein mehrere Batteriezellen 8 aufweisendes Zellpaket 7 angeordnet. Das Zellpaket kontaktiert den Modulboden 5 sowie die Zwischenwand 17 großflächig. Ein Federblech 13 einer Federvorrichtung 9 ist gegen Randbereiche 19 der ersten Modulseitenwand 4a sowie großflächig gegen das Zellpaket 7 abgestützt. Das Federblech 13 ist derart vorgespannt, dass das Zellpaket 7 mit einer definierten Kraft gegen die Zwischenwand 17 gedrückt wird. Zwischen dem Zellpaket 7 und der ersten Modulseitenwand 4a ist somit ebenfalls ein Deformationsraum 10 ausgebildet, wobei dieser Deformationsraum 10 zur Aufnahme eines deformierten Bereichs der ersten Modulseitenwand 4a ausgebildet ist.

Oberhalb des Zellpakets 7 ist eine Kühlungsvorrichtung 14 zum Kühlen des Zellpakets 7 angeordnet. Die Kühlungsvorrichtung 14 kontaktiert das Zellpaket 7 sowie den Moduldeckel 6 großflächig. Auf diese Weise ist das Zellpaket 7 besonders vor seitlichen mechanischen Beanspruchungen des Batteriemoduls 1, insbesondere bei einem Fahrzeugcrash, geschützt. Ferner ist das altersbedingte Swelling des Zellpakets 7 aufgrund der definierten Kompression des Zellpakets 7 reduziert.

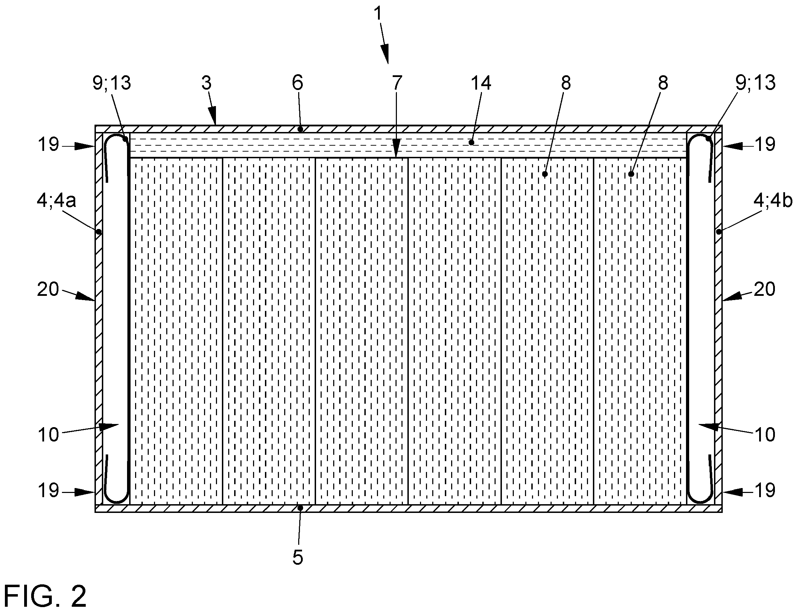

In Fig. 2 ist eine zweite Form eines nicht erfindungsgemäßen Batteriemoduls 1 schematisch in einer Schnittdarstellung abgebildet. Das Batteriemodul 1 gemäß dieser bevorzugten zweiten Ausführungsform unterscheidet sich von dem Batteriemodul 1 gemäß der in Fig. 1 gezeigten bevorzugten ersten Ausführungsform in dem Merkmal, dass diese anstatt einer Zwischenwand 17 mit Abstützelemente 18 eine weitere Federvorrichtung 9 mit einem Federblech 13 aufweist. Das Federblech 13 ist zwischen zwei Randbereichen 19 der zweiten Modulseitenwand 4b und dem Zellpaket 7 verspannt und kontaktiert das Zellpaket 7 großflächig. Die Federvorrichtung 9 drückt das Zellpaket 7 in Richtung der ersten Modulseitenwand 4a. Zwischen dem Zellpaket 7 und der zweiten Modulseitenwand 4b ist ebenfalls ein Deformationsraum 10 zur Aufnahme eines deformierten Bereichs der zweiten Modulseitenwand 4b ausgebildet.

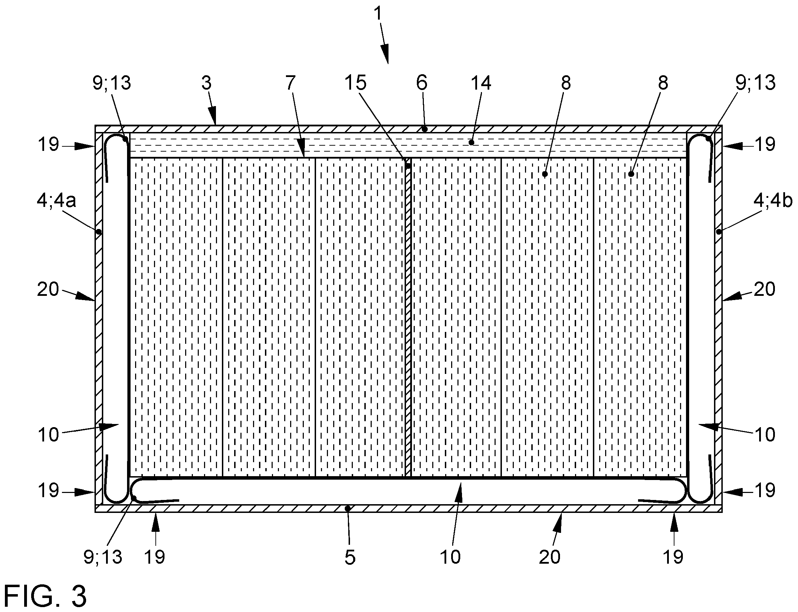

In Fig. 3 ist eine bevorzugte dritte Ausführungsform eines erfindungsgemäßen Batteriemoduls 1 schematisch in einer Schnittdarstellung abgebildet. Das Batteriemodul 1 gemäß dieser bevorzugten dritten Ausführungsform unterscheidet sich von dem Batteriemodul 1 gemäß der in Fig. 2 gezeigten bevorzugten zweiten Ausführungsform in dem Merkmal, dass zwischen dem Modulboden 5 und dem Zellpaket 7 eine weitere Federvorrichtung 7 mit einem Federblech 13 angeordnet ist. Das Federblech 13 ist zwischen zwei Randbereichen 19 des Modulbodens 5 und dem Zellpaket 7 verspannt und kontaktiert das Zellpaket 7 großflächig. Die Federvorrichtung 9 drückt das Zellpaket 7 in Richtung des Moduldeckels 6. Zwischen dem Zellpaket 7 und dem Modulboden 5 ist ebenfalls ein Deformationsraum 10 zur Aufnahme eines deformierten Bereichs des Modulbodens 5 ausgebildet. Ferner weist das Batteriemodul 1 eine Abstützvorrichtung 15 auf, welche innerhalb des Modulgehäuses 3 angeordnet ist und die Kühlungsvorrichtung 14 gegen das mit dem Modulboden 5 verspannte Federblech 13 abstützt. Auf diese Weise wird auch der Moduldeckel 6 über die Abstützvorrichtung 15 gegen das Federblech 13 abgestützt.

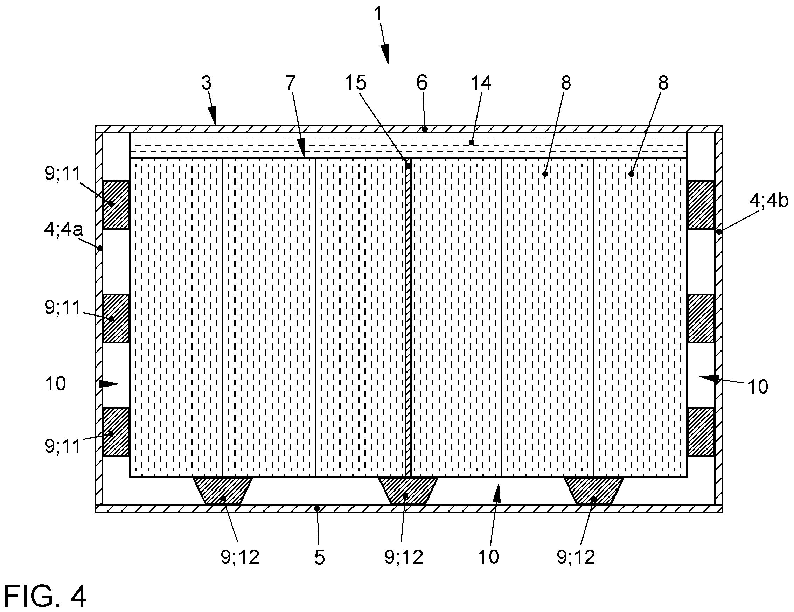

In Fig. 4 ist eine bevorzugte vierte Ausführungsform eines erfindungsgemäßen Batteriemoduls 1 schematisch in einer Schnittdarstellung abgebildet. Das Batteriemodul 1 gemäß dieser bevorzugten vierten Ausführungsform unterscheidet sich von dem Batteriemodul 1 gemäß der in Fig. 2 gezeigten bevorzugten dritten Ausführungsform in dem Merkmal, dass die Federvorrichtungen 9, welche das Zellpaket 7 gegen die Modulseitenwände 4 abstützen, anstatt eines Federblechs 13 mehrere Schraubenfedern 11 aufweisen. Die Federvorrichtung 9, welche das Zellpaket 7 gegen den Modulboden abstützt, weist anstatt eines Federblechs 13 mehrere Tellerfedern 12 auf.

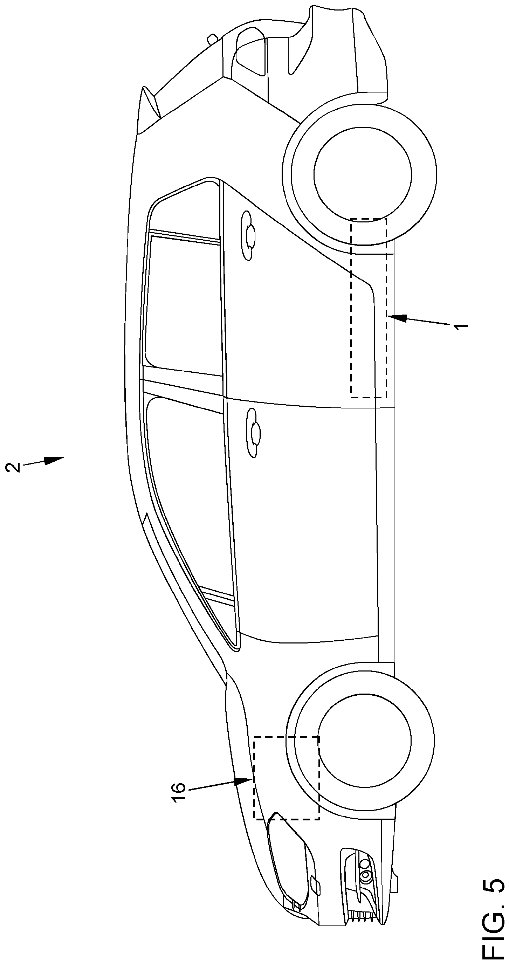

In Fig. 5 ist eine bevorzugte Ausführungsform eines erfindungsgemäßen Kraftfahrzeugs 2 schematisch in einer Seitenansicht abgebildet. Das Kraftfahrzeug weist einen Elektromotor 16 auf, welcher zum Antreiben des Kraftfahrzeugs 2 ausgebildet ist. Vorzugsweise weist das Kraftfahrzeug 2 mehrere, nicht abgebildete Elektromotoren 16 auf, welche zum Antreiben des Kraftfahrzeugs 2 ausgebildet sind. Weiter bevorzugt ist der Elektromotor 16 zum Generieren von elektrischem Strom, beispielsweise beim Rekuperieren, ausgebildet. Es kann erfindungsgemäß vorgesehen sein, dass das Kraftfahrzeug 2 zusätzlich einen nicht abgebildeten Verbrennungsmotor aufweist, welcher beispielsweise zum Antreiben des Kraftfahrzeugs 2 und/oder zum Antreiben des Elektromotors 16 zum Generieren von elektrischem Strom auf. Zum Speichern elektrischer Energie zum Betreiben des Elektromotors 16 weist das Kraftfahrzeug 2 ein erfindungsgemäßes Batteriemodul 1 auf.

### Bezugszeichenliste

- 1: Batteriemodul
- 2: Kraftfahrzeug
- 3: Modulgehäuse
- 4: Modulseitenwand
- 4a: erste Modulseitenwand
- 4b: zweite Modulseitenwand
- 5: Modulboden
- 6: Moduldeckel
- 7: Zellpaket
- 8: Batteriezelle
- 9: Federvorrichtung
- 10: Deformationsraum
- 11: Schraubenfeder
- 12: Tellerfeder
- 13: Federblech
- 14: Kühlungsvorrichtung
- 15: Abstützvorrichtung
- 16: Elektromotor
- 17: Zwischenwand
- 18: Abstützelement
- 19: Randbereich
- 20: zentraler Bereich

## Patentansprüche

1. Lasttragendes Batteriemodul (1) für ein Kraftfahrzeug (2), aufweisend ein Modulgehäuse (3) mit Modulseitenwänden (4), einem Modulboden (5) sowie einem Moduldeckel (6) und ein innerhalb des Modulgehäuses (3) angeordnetes Zellpaket (7) mit mehreren Batteriezellen (8),
**dadurch gekennzeichnet,**
**dass** zwischen mindestens einer ersten Modulseitenwand (4a) und dem Zellpaket (7) mindestens eine Federvorrichtung (9) angeordnet ist, wobei die Federvorrichtung (9) zum Drücken des Zellpakets (7) in Richtung einer der ersten Modulseitenwand (4a) entgegengesetzten zweiten Modulseitenwand (4b) zur Bildung eines Deformationsraums (10) zwischen der ersten Modulseitenwand (4a) und dem Zellpaket (7) ausgebildet ist, wobei zwischen dem Zellpaket (7) und dem Moduldeckel (6) eine Kühlungsvorrichtung (14) zum Ableiten von Wärme aus dem Zellpaket (7) angeordnet ist, wobei zwischen dem Modulboden (5) und dem Zellpaket (7) eine Federvorrichtung (9) angeordnet ist, wobei die Federvorrichtung (9) zum Drücken des Zellpakets (7) in Richtung des Moduldeckels (6) zur Bildung eines Deformationsraums (10) zwischen dem Modulboden (5) und dem Zellpaket (7) ausgebildet ist, wobei innerhalb des Modulgehäuses (3) eine Abstützvorrichtung (15) angeordnet ist, welche sich zwischen dem Moduldeckel (6) und dem Modulboden (5) erstreckt, und wobei ein oberes Abstützende der Abstützvorrichtung (15) gegen den Moduldeckel (6) oder die Kühlungsvorrichtung (14) und ein unteres Abstützende der Abstützvorrichtung (15) gegen die zwischen dem Modulboden (5) und den Zellpaketen (7) angeordnete Federvorrichtung (9) abgestützt ist.

2. Lasttragendes Batteriemodul (1) nach Anspruch 1,
**dadurch gekennzeichnet,**
**dass** die mindestens eine Federvorrichtung (9) eine Schraubenfeder (11) und/oder eine Tellerfeder (12) aufweist.

3. Lasttragendes Batteriemodul (1) nach Anspruch 1 oder 2,
**dadurch gekennzeichnet,**
**dass** die mindestens eine Federvorrichtung (9) ein Federblech (13) aufweist.

4. Lasttragendes Batteriemodul (1) nach wenigstens einem der vorangegangenen Ansprüche,
**dadurch gekennzeichnet,**
**dass** zwischen der zweiten Modulseitenwand (4b) und dem Zellpaket (7) eine Federvorrichtung (9) angeordnet ist, wobei die Federvorrichtung (9) zum Drücken des Zellpakets (7) in Richtung der ersten Modulseitenwand (4a) zur Bildung eines Deformationsraums (10) zwischen der zweiten Modulseitenwand (4b) und dem Zellpaket (7) ausgebildet ist.

5. Lasttragendes Batteriemodul (1) nach wenigstens einem der vorangegangenen Ansprüche,
**dadurch gekennzeichnet,**
**dass** mindestens zwei Federvorrichtungen (9) als monolithische Federvorrichtung (9) ausgebildet sind.

6. Lasttragendes Batteriemodul (1) nach wenigstens einem der vorangegangenen Ansprüche,
**dadurch gekennzeichnet,**
**dass** die Abstützvorrichtung (15) parallel zu zwei entgegengesetzten Modulseitenwänden (4) und/oder senkrecht zum Modulboden (5) und/oder Moduldeckel (6) angeordnet ist.

7. Kraftfahrzeug (2), aufweisend einen Elektromotor (16) zum Antreiben des Kraftfahrzeugs (2) und ein lasttragendes Batteriemodul (1) zum Bereitstellen elektrischer Energie zum Betreiben des Elektromotors (16),
**dadurch gekennzeichnet,**
**dass** das lasttragende Batteriemodul (1) gemäß einem der Ansprüche 1 bis 6 ausgebildet ist.

## Claims

1. Load-bearing battery module (1) for a motor vehicle (2), comprising a module housing (3) having module side walls (4), a module floor (5), and a module cover (6), and comprising a cell package (7) having a plurality of battery cells (8) arranged within the module housing (3),
**characterized in that**
at least one spring device (9) is arranged between at least one first module side wall (4a) and the cell package (7), the spring device (9) being designed to push the cell package (7) in the direction of a second module side wall (4b) opposite the first module side wall (4a) in order to form a deformation space (10) between the first module side wall (4a) and the cell package (7), a cooling device (14) for dissipating heat from the cell package (7) being arranged between the cell package (7) and the module cover (6), a spring device (9) being arranged between the module floor (5) and the cell package (7), the spring device (9) being designed to push the cell package (7) in the direction of the module cover (6) in order to form a deformation space (10) between the module floor (5) and the cell package (7), a support device (15) which extends between the module cover (6) and the module floor (5) being arranged within the module housing (3), and an upper support end of the support device (15) being supported against the module cover (6) or the cooling device (14), and a lower support end of the support device (15) being supported against the spring device (9) arranged between the module floor (5) and the cell packages (7).

2. Load-bearing battery module (1) according to claim 1,
**characterized in that**
the at least one spring device (9) comprises a helical spring (11) and/or a disk spring (12).

3. Load-bearing battery module (1) according to either claim 1 or claim 2,
**characterized in that**
the at least one spring device (9) comprises a spring steel sheet (13).

4. Load-bearing battery module (1) according to at least one of the preceding claims,
**characterized in that**
a spring device (9) is arranged between the second module side wall (4b) and the cell package (7), the spring device (9) being designed to push the cell package (7) in the direction of the first module side wall (4a) in order to form a deformation space (10) between the second module side wall (4b) and the cell package (7).

5. Load-bearing battery module (1) according to at least one of the preceding claims,
**characterized in that**
at least two spring devices (9) are designed as a monolithic spring device (9).

6. Load-bearing battery module (1) according to at least one of the preceding claims,
**characterized in that**
the support device (15) is arranged in parallel to two opposing module side walls (4) and/or perpendicularly to the module floor (5) and/or module cover (6).

7. Motor vehicle (2), comprising an electric motor (16) for driving the motor vehicle (2) and a load-carrying battery module (1) for providing electrical energy in order to operate the electric motor (16),
**characterized in that**
the load-bearing battery module (1) is designed according to any of claims 1 to 6.

## Revendications

1. Module de batterie (1) porteur de charge pour un véhicule automobile (2), présentant un boîtier de module (3) comportant des parois latérales de module (4), un fond de module (5) ainsi qu'un couvercle de module (6) et un paquet de cellules (7) disposé à l'intérieur du boîtier de module (3) et comportant plusieurs cellules de batterie (8),
**caractérisé en ce que**
au moins un dispositif formant ressort (9) est disposé entre au moins une première paroi latérale de module (4a) et le paquet de cellules (7), dans lequel le dispositif formant ressort (9) est conçu pour pousser le paquet de cellules (7) en direction d'une seconde paroi latérale de module (4b) opposée à la première paroi latérale de module (4a) pour la formation d'un espace de déformation (10) entre la première paroi latérale de module (4a) et le paquet de cellules (7), dans lequel un dispositif de refroidissement (14) permettant de dissiper de la chaleur du paquet de cellules (7) est disposé entre le paquet de cellules (7) et le couvercle de module (6), dans lequel un dispositif formant ressort (9) est disposé entre le fond de module (5) et le paquet de cellules (7), dans lequel le dispositif formant ressort (9) est conçu pour pousser le paquet de cellules (7) en direction du couvercle de module (6) pour la formation d'un espace de déformation (10) entre le fond de module (5) et le paquet de cellules (7), dans lequel un dispositif d'appui (15) est disposé à l'intérieur du boîtier de module (3), lequel dispositif d'appui s'étend entre le couvercle de module (6) et le fond de module (5), et dans lequel une extrémité d'appui supérieure du dispositif d'appui (15) est appuyée contre le couvercle de module (6) ou le dispositif de refroidissement (14) et une extrémité d'appui inférieure du dispositif d'appui (15) est appuyée contre le dispositif formant ressort (9) disposé entre le fond de module (5) et les paquets de cellules (7).

2. Module de batterie (1) porteur de charge selon la revendication 1,
**caractérisé en ce que**
l'au moins un dispositif formant ressort (9) présente un ressort hélicoïdal (11) et/ou une rondelle-ressort (12).

3. Module de batterie (1) porteur de charge selon la revendication 1 ou 2,
**caractérisé en ce que**
l'au moins un dispositif formant ressort (9) présente une tôle élastique (13).

4. Module de batterie (1) porteur de charge selon au moins l'une des revendications précédentes,
**caractérisé en ce que**
un dispositif formant ressort (9) est disposé entre la seconde paroi latérale de module (4b) et le paquet de cellules (7), dans lequel le dispositif formant ressort (9) est conçu pour pousser le paquet de cellules (7) en direction de la première paroi latérale de module (4a) pour la formation d'un espace de déformation (10) entre la seconde paroi latérale de module (4b) et le paquet de cellules (7).

5. Module de batterie (1) porteur de charge selon au moins l'une des revendications précédentes,
**caractérisé en ce que**
au moins deux dispositifs formant ressort (9) sont conçus comme un dispositif formant ressort (9) monolithique.

6. Module de batterie (1) porteur de charge selon au moins l'une des revendications précédentes,
**caractérisé en ce que**
le dispositif d'appui (15) est disposé parallèlement à deux parois latérales de module (4) opposées et/ou perpendiculairement au fond de module (5) et/ou au couvercle de module (6).

7. Véhicule automobile (2), présentant un moteur électrique (16) permettant l'entraînement du véhicule automobile (2) et un module de batterie (1) porteur de charge pour la fourniture d'énergie électrique permettant de faire fonctionner le moteur électrique (16),
**caractérisé en ce que**
le module de batterie (1) porteur de charge est conçu selon l'une des revendications 1 à 6.
